## Europäisches Patentamt
## European Patent Office
## Office européen des brevets

(19)

(11) Veröffentlichungsnummer: **0 271 137**
A2

# EUROPÄISCHE PATENTANMELDUNG

(21) Anmeldenummer: **87202269.4**

(22) Anmeldetag: **19.11.87**

(51) Int. Cl.⁴: **B62D 33/02**

(30) Priorität: **11.12.86 DE 8633232 U**

(43) Veröffentlichungstag der Anmeldung:
**15.06.88 Patentblatt 88/24**

(84) Benannte Vertragsstaaten:
**BE DE FR GB LU NL**

(71) Anmelder: **ALCOA NEDERLAND B.V.**
**Lipsstraat 40 P.O. Box 21**
**NL-5150 BA Drunen(NL)**

(72) Erfinder: **Van Beers, Harrie Bernardus Maria**
**Lipsstraat 9**
**NL-5151 BH Drunen(NL)**

(74) Vertreter: **van der Beek, George Frans, Ir. et al**
**Nederlandsch Octrooibureau P.O. Box 29720**
**NL-2502 LS The Hague(NL)**

(54) **Leichtmetall-Bordwand für Ladeflächen von Kraftfahrzeugen.**

(57) Eine Leichtmetall-Bordwand ist aus mehreren extrudierten Aluminiumprofilen zusammengesetzt. Zwei Verhakungsgestellen sind in einer im wesentlichen senkrecht zu den Profilen verlaufenden Ebene vorgesehen. Aufeinander folgende Profile werden durch verkantetes Aneinanderfügen und Drehen nach dem Snap-Lock-Prinzip miteinander verbunden. In einer Verhakungsstelle liegen die Profile mittels eines elastischen Profils, vorzugsweise eines Kunststoffprofils aneinander an.

## Leichtmetall-Bordwand für Ladeflächen von Kraftfahrzeugen.

Die Erfindung bezieht sich auf eine Leichtmetall-Bordwand für Ladeflächen von Kraftfahrzeugen und Anhänger, insbesondere Kippfahrzeuge, mit im Querschnitt im wesentlichen rechteckigen stranggepressten Profilen, die über längsseitig vorgesehene ineinandersteckbare Randprofile nach dem Snap-Lock-Prinzip miteinander verbindbar sind, wobei zwei Verhakungsstellen in einer im wesentlichen senkrecht zu den äusseren Hauptflächen der Profile verlaufenden Ebene an den Randprofilen vorgesehen sind, und das eine Profil im wesentlichen durch verkantetes Einsetzen eines anderen Randprofils in ein am Randprofil des anderen Profils angeordnetes Stützlager und anschliessendes Drehen mit dem folgenden Profil verriegelbar ist.

Bordwände aus stranggepressten Leichtmetall-Profilen für Ladeflächen von Pritschenwagen und pritschenwagenähnlichen Hängern sind bekannt. Moderne Profile sind längsseitig mit ineinandersteckbaren Randprofilen versehen, die sich zu einem Schnappverschluss ergänzen. Ein solcher Schnappverschluss oder Snap-Lock ergibt eine vergleichsweise starre Verbindung der ineinandergesteckten Bordwand-Profile mite guter Formstabilität einer aus mehreren solchen Profilen zusammengesteckten Bordwand; vgl. DE-U-85 23 786.8.

Wegen der hohen statischen und dynamischen Beanspruchungen der Aufbauten von Pritschenfahrzeugen und Anhängern besteht die Gefahr dass nach längeren Betriebszeit die Festigkeit der Bordwänden geringer wird, weil Spiel entsteht bei den Verhakungsstellen.

Insbesondere wenn die Bordwände mit einer Farbschicht versehen sind entstehen bei den Verhakungsteilen schwarze Linien.

Die Aufgabe der Neuerung besteht darin, eine Leichtmetall-Bordwand der eingangs-genannten Art zu schaffen, die auch nach längeren Betriebszeit die Festigkeit behält.

Diese Aufgabe wird daruch gelöst, dass bei fluchtenden Bordwandprofilen die Randprofile der anderen Verhakungsstellen mittels eines elastischen Profils, vorzugsweise eines Kunststoffprofils aneinander anliegen.

Durch die Anwendung eines elastischen Profils wird etwaige Spiel aufgenommen und bleiben die Bordwände steif miteinander verbunden, auch nach längerer Betriebszeit.

Vorzugsweise ist das elastische Profil vorgeformt.

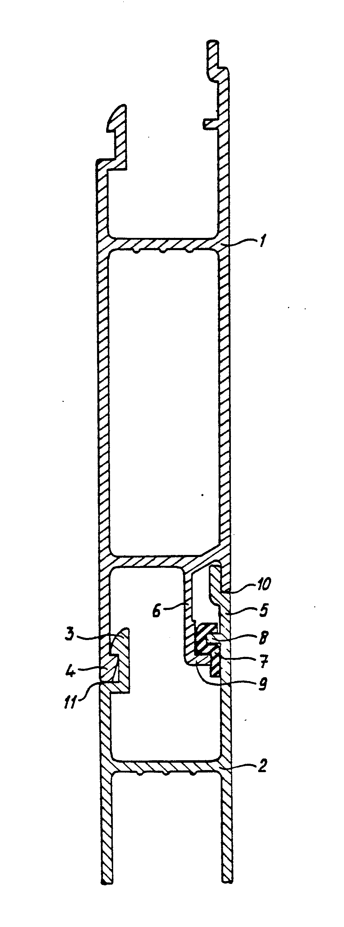

Weitere Einzelheiten, Merkmale und Vorteile der Erneuerung ergeben sich aus der folgenden Beschreibung eines bevorzugten Ausführungsbeispiels sowie anhand der Zeichnung, in welcher die Bordwandprofile im montierten Zustand gezeigt werden, wobei die Bordwandprofile fluchten und der Schnappverschluss voll wirksam geworden ist.

In der Zeichnung sind jeweils zwei miteinander nach dem Snap-Lock-Prinzip zu verbindende Bordwand-Profile oder Profile 1 und 2 gezeigt. Jedes der Profile 1 und 2 ist jeweils an seinem gegenüberliegenden, nicht gezeigten Ende genauso ausgebildet, wie das gezeigte Ende des anderen Profils. Auf diese Weise können die erfindungsgemässen Bordwand-Profile in der in der Zeichnung gezeigten Weise über die komplementäre Ausbildung ihrer beiden Enden miteinander nach dem Snap-Lock-Prinzip mittels des gezeichneten Schnapverschlusses miteinander praktisch unlösbar verbunden werden. Zu diesem Zwecke sind das Profil 1 und 2 jeweils auf der einen Seite mit einem Federhaken 3 bzw. 4 versehen, auf der gegenüberliegenden Seite mit den Teilen 5 und 6 einer weiteren Verhakungsstelle.

Um auch nach längeren Betriebszeit Spiel in der Bordwand zu verhindern wird gemäss der Neuerung ein Kunststofprofil 7 zwischen den Stegen 8 und 9 der Verhakungsstelle 5, 6 angeordnet.

Dieses vorzugsweise vorgeformte Kunststoffprofil 7 erstreckt sich über die ganze Höhe der Bordwände und wird bei der Zusammensetzung durch etwas Verkanten der Bordwandprofile angeordnet.

Hierdurch wird verhindert dass bei den berührungsstellen 10 und 11 Spiele entstehen. Wenn die Bordwände 1,2 mit einer nicht-gezeigten Farbschicht versehen sind würden diese Spiele Anlass zu störenden Linien geben, wobei ausserdem die Festigkeit der Konstruktion kleiner wird.

## Ansprüche

1. Leichtmetall-Bordwand für Ladeflächen von Kraftfahrzeugen und Anhängern, insbesondere Kippfahrzeugen, mit im Querschnitt im wesentlichen rechteckigen stranggepressten Profilen, die über längsseitig vorgesehene ineinandersteckbare Randprofile nach dem Snap-Lock-Prinzip miteinander verbindbar sind, wobei zwei Verhakungsstellen in einer im wesentlichen senkrecht zu den äusseren Hauptflächen der Profile verlaufenden Ebene an den Randprofilen vorgesehen sind, und das eine Profil im wesentlichen durch verkantetes Einsetzen seines einen Randprofils in ein am Randprofil des anderen Profils angeordnetes Stützlager und anschliessendes Drehen mit dem folgenden Profil miteinander verriegelbar ist, **dadurch gekennzeichnet,** dass bei fluchtenden Bordwandprofilen (1,2) die Randprofile (5,6) der anderen Verhakingsstelle mittels eines elastischen Profils, vorzurgsweise eines Kunststoffprofils (7) aneinander anliegen.

2. Leichtmetall-Bordwand gemäss Schutzanspruch 1, **dadurch gekennzeichnet,** dass das elastische Profil (7) vorgeformt ist.